# EUROPEAN PATENT APPLICATION

(11) **EP 2 169 261 A2**
(43) Date of publication of application: **31.03.2010**
(21) Application number: 09159705.4
(22) Date of filing: 07.05.2009
(51) Int. Cl.: F16H 1/10

(54) **Pinion and crown gear for precision gear mechanism**

(30) Priority: 24.09.2008 ES 200802708
(71) Applicant: Tecnogiro, S.L., 08798 Sant Cugat de Sesgarrigues (ES)
(72) Inventor: Lucas Morata, Francisco, 08798 Sant Cugat de Sesgarrigues (ES)
(74) Representative: Pons Ariño, Angel

(57) **Abstract**

Pinion-crown gear unit for precision cogs for the transmission of rotational movements at low speeds from the driving pinion (2) to the crown gear (1) whereon a device (3) has been installed to orient it angularly, the gearing thereof comprises a trough (4) of semi-circular geometry for the meshing of a plurality of rotating axles (5), of the same diameter as the crown gear (1) trough (4), mounted transversally on the periphery of the pinion (2), so that there are always three axles (5) in contact with the crown gear (1).

## Description

### OBJECT OF THE INVENTION

The present invention relates to a pinion-crown gear unit for precision cogs with an almost inexistent clearance between them.

The pinion-crown gear unit object of the present invention is devised to for those applications or mechanisms which require great precision between the pinion and the crown, such as, for example, in the orientation mechanisms of the solar panels and concentrators, in which it is fundamental to achieve the prefect orientation, in order to take advantage of its maximum performance.

### BACKGROUND OF THE INVENTION

Normally, meshing between a pinion and a crown is carried out by means of a traditional gearing, the calculation and geometry whereof being widely known in the state of the art.

Meshing between pinion and crown by means of traditional gearing has many applications and advantages when transmitting large forces and/or high speeds, but has the drawback that it features a substantial clearance, and therefore considerable imprecision, when transmitting precise forces and/or movements.

In the specific case of the solar trackers installed in solar vegetable gardens, the orientation mechanisms require high precision cogs in order to transmit small movements at low speeds with small loads, which means that meshing with traditional gearing is not suitable.

### DESCRIPTION OF THE INVENTION

The pinion-crown gear unit for precision cogs proposed by the invention resolves the problem previously set forth, as it permits a meshing with practically no clearance between them.

To do this, and more specifically, the pinion-crown gear unit for precision cogs is devised for the transmission of rotational movements at low speeds from the driving gear to the crown gear, whereon has been installed the device to angularly orient it. Therefore, the crown gear trough is of semi-circular geometry for the meshing of a plurality of rotating axles, of the same diameter as the crown gear trough, mounted transversally on the periphery of the pinion, so that there are always three axles in contact with the crown teeth.

In a first embodiment, the roller pinion is made up of a pulley provided with a striated axial orifice for the coupling thereof to the motor axle, having been provided with the arrangement of a plurality of transversal orifices on the walls of the annular groove of the pulley, whereon are mounted the rotating axles.

Said rotating axles are mounted on the transversal orifices by means of friction bearings attached on the ends thereof.

The transversal orifices made in one of the annular grooved walls of the pulley, are blind, while those on the other wall are through-holes to facilitate the insertion of the rotating axles, having been provided with the arrangement of a disk-shaped closure lid to prevent the exit thereof.

In a second embodiment, the roller pinion is made up of two toothed end plates, whereon is mounted a triple roller chain, the central rollers whereof gearing to the crown teeth.

In order to facilitate the entrance and exit of the rollers in the crown teeth, the end of the teeth thereof are slightly sloped.

Thanks to this pinion-crown gear unit we achieve that there are always three rotating axles in contact with the crown teeth and thus achieve the minimum clearance between the two parts, because as it has more than one point in contact it achieves an interlocking which prevents all possible movements.

### DESCRIPTION OF THE DRAWINGS

In order to complement the description being carried out and with the purpose of helping towards a better understanding of the characteristics of the invention, in accordance with a preferred example of practical embodiment thereof, a set of drawing is attached as an integral part of said description, wherein the following, in an illustrative and non-limitative character, has been represented:
Figure 1 shows a perspective view of a part of the crown gear whereto the pinion is gearing.
Figure 2 shows a close-up plan view of the three rotating axles which are in contact with the crown teeth.
Figure 3 shows a cross-section perspective view of the pinion-crown gear unit duly geared.
Figure 4 shows a perspective view of the entire pinion.

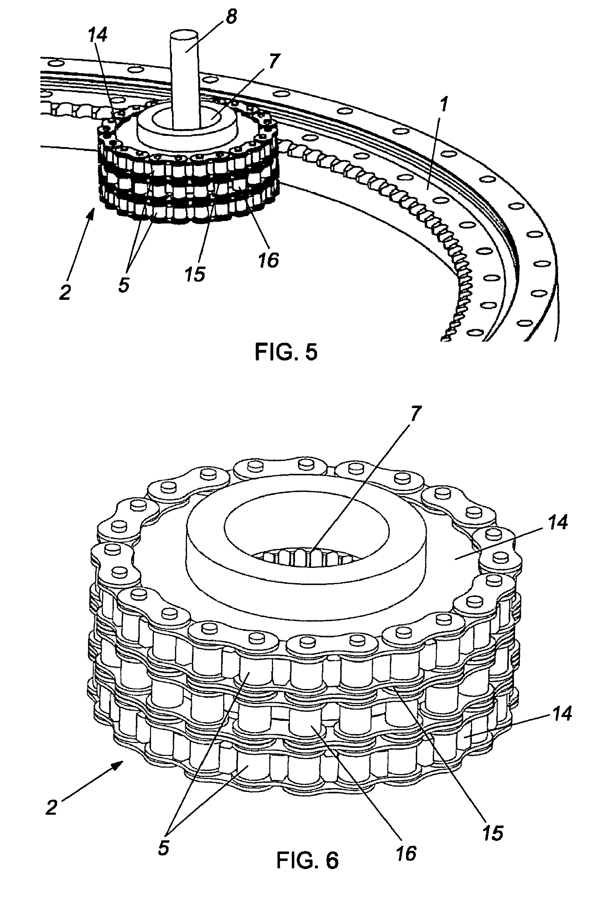

Figure 5 shows a perspective view of a part of the crown gear whereto is geared the pinion, in this case in its chain version.
Figure 6 shows a perspective view of the entire pinion, in its chain version.
Figure 7 shows an application of the pinion-crown gear unit object of the invention for the orientation of a solar panel.

### PREFERRED EMBODIMENT OF THE INVENTION

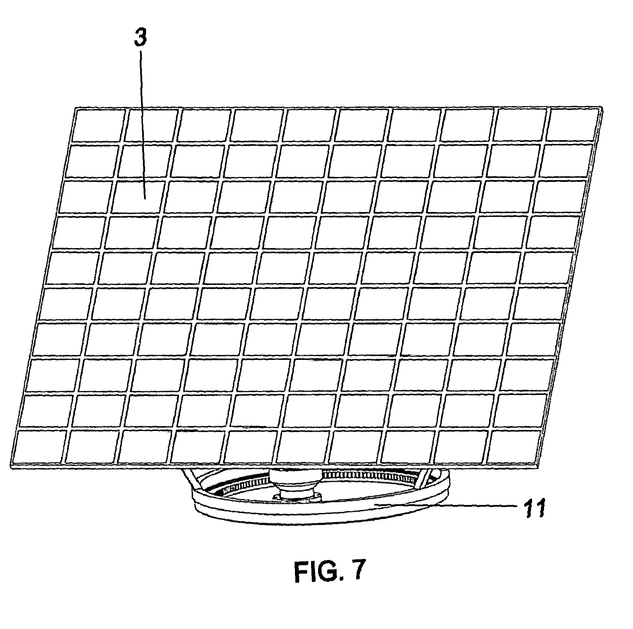

In view of the figures shown, it can be observed how the pinion-crown gear unit for precision cogs is made up of a crown gear (1), interior for the present example of embodiment, whereto gears a roller pinion (2) for the transmission of precise angular movements. One possible application of the pinion-crown gear unit is represented in figure 7, wherein the installation of a solar panel (3) on the crown gear (1) can be observed, which must be oriented continuously with great precision in order to take advantage of the solar radiation as much as possible.

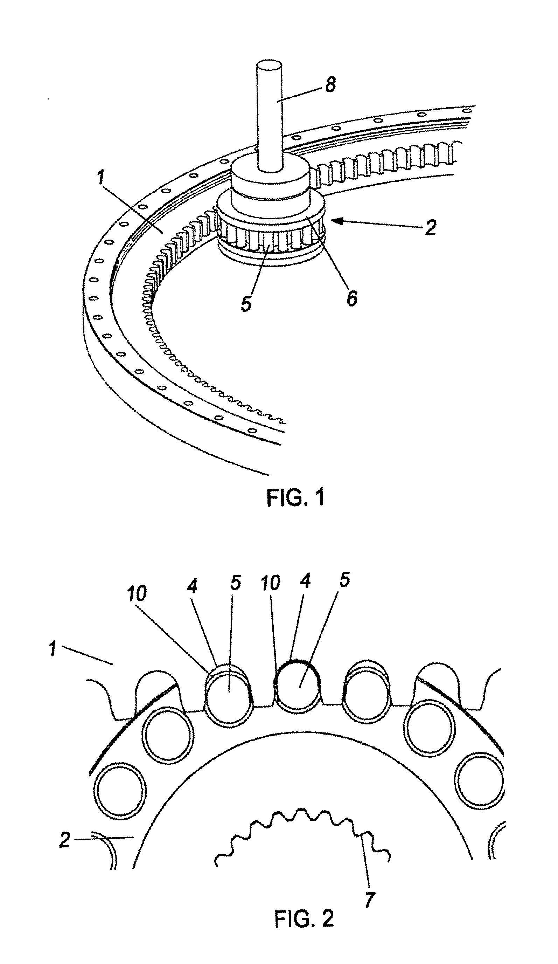

In order to achieve the maximum precision, it is necessary for the clearance or gap between the crown gear (1) and the driving gear (2) to be practically inexistent. To do this, the crown gear (1) trough (4) is of semi-circular geometry for the meshing of a plurality of rotating axles (5), of the same diameter as the crown gear (1) trough (4) , mounted transversally on the periphery of the pinion (2), so that there are always three rollers (5) in contact with the crown teeth (1), as can be observed in figure 2. With this special gearing we achieve that there are always three rollers (5) in contact with the crown gear (1) and thus achieve the minimum clearance between the two parts, because as it has more than one point in contact it achieves an interlocking which prevents all possible movements. Likewise, given that the rollers (5) are facilitated to rotate freely on their axial axis, we ensure the maximum surface contact with the minimal friction.

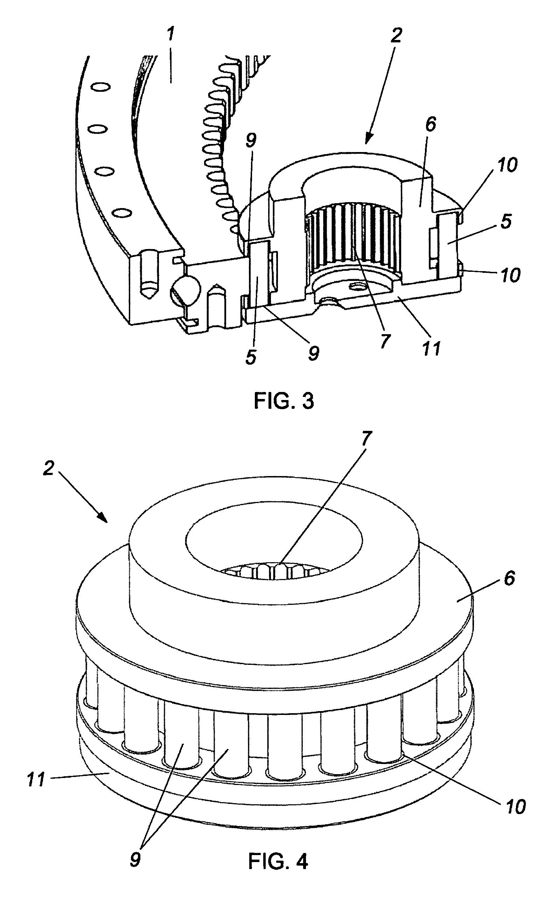

A can be observed in figures 3 and 4, in a first embodiment, the pinion (2) is made up of a pulley (6) provided with a striated axial orifice (7) for the coupling thereof to the motor axle (8). The walls of the annular groove of the pulley (6) are provided with a plurality of orifices (9) whereon are mounted the rotating axles (5).

The rotating axles (5) are mounted on the orifices (9) by means of friction bearings (10) attached to the ends of the rotating axles (5). In order to facilitate the assembly of the rotating axles (5) on the grooving of the pulley (6), the orifices (9) made in one of the walls which define said grooves are blind, while those on the other wall are through-holes. In order to prevent the involuntary exit of the rotating axles (5) through the through-holes (9) it has been provided with a disk-shaped closure lid (11), duly screwed on.

In a second embodiment, the pinion (2) is made up of two toothed end plates (14), both provided in their axial orifice with a ribbing (7) for its coupling to the driving axle (8), whereon is mounted a triple roller chain (15), the central rollers (16) whereof gearing to the crown teeth (1). The triple chain (15) is a transmission chain of the conventional type which completely surrounds the periphery of the pinion (2). In this case, the end rollers of the triple chain (15) gear to the toothed plates (14) and the central rollers (16), with the crown gear (1).
Finally, to facilitate the entrance and exit of the rollers (5) in the crown teeth, the end of the teeth thereof are slightly sloped, as can be observed in figure 2.

## Claims

1. Pinion-crown gear unit for precision cogs for the transmission of rotational movements at low speeds from the driving pinion (2) to the crown gear (1) whereon a device (3) has been installed to orient it angularly, **characterized in that** the crown gear (1) trough (4) is of semi-circular geometry for the meshing of a plurality of rotating axles (5), of the same diameter as the crown gear (1) trough (4), mounted transversally on the periphery of the pinion (2), so that there are always three axles (5) in contact with the crown gear (1).

2. Pinion-crown gear unit for precision cogs, according to claim 1, **characterized in that** the pinion (2) is composed of a pulley (6) provided with a striated axial orifice (7) for the coupling thereof to the driving axle (8), having been provided with an arrangement of a plurality of transversal orifices (9) on the walls of the annular groove of the pulley (6) whereon are mounted the rotating axles (5).

3. Pinion-crown gear unit for precision cogs, according to claim 2, **characterized in that** the rotating axles (5) are mounted on the transversal orifices (9) by means of friction bearings (10) coupled to the ends of the rotating axles (5).

4. Pinion-crown gear unit for precision cogs, according to claim 2, **characterized in that** the transversal orifices (9) made in one of the walls of the annular groove of the pulley (6) are blind, while those on the other wall are through-holes for the insertion of the rotating axles (5), having been provided with a disk-shaped closure lid (11) to prevent the exit thereof.

5. Pinion-crown gear unit for precision cogs, according to claim 1, **characterized in that** the pinion (2) is composed of two toothed end plates (14) whereon is mounted a triple roller (5) chain (15), the central rollers whereof gearing to the crown teeth (1).

6. Pinion-crown gear unit for precision cogs, according to claim 1, **characterized in that** the end of the teeth of the crown gear (1) are slightly sloped in order to facilitate the entrance and exit of the axles (5).
